# EUROPEAN PATENT APPLICATION

(11) **EP 1 136 454 A1**
(43) Date of publication of application: **26.09.2001**
(21) Application number: 00830218.4
(22) Date of filing: 22.03.2000
(51) Int. Cl.: C03B 23/203

(54) **Glass double layer mosaic tessera united and coloured by thermic fusion**

(71) Applicant: Megaron srl., 84015 Nocera Superiore (SA) (IT)
(72) Inventor: Di Costanzo, Carmine, 84015 Nocera Superiore (SA) (IT)

(57) **Abstract**

Glass tesseras specially created for composing ornamental mosaics, characterised by the formal thickness of two flat elements made of industrial glass, which are superimposed and joined through thermic fusion and coloured during the process of fusion (or joining) of the same, with eliminating all risk of the two plates separating or coming unglued, something that could occur in a simple glued sandwich structure and with physical superficial effects of brilliance and/or refractivity, giving a visual effect of depth that cannot be found in products using the preceding technique.

## Description

### Technical Field

The objective of this invention is a product and its associated industrial procedure of joining flat plates of glass together and colouring them by heating to the temperature at which glass softens and subsequently cooling, then cutting them into tesseras for use in composing ornamental mosaics.

### Technical status

Various procedures are in use today for colouring flat plates of glass; by carefully mixing opportune minerals into the vitrifiable paste so that the glass is coloured all through, by using a more economic method that limits the colours to the surface of the glass, using transparent industrial type glass (float glass) that is coloured by brushing or spraying the surface of the glass with a thin layer of colour, or using a silk screen or a glazing process, after which the glass undergoes a setting bake at around 500°C. according to the oxide colouring used. The glass will become vitriflable and transparent at the temperature at which glass fuses superficially, that is, 600-800°C.

Another technique is that of using transfers. This technique, although usually obtaining satisfactory results from the point of view of colouring the glass, is not very economic, given that it is necessary to form the layer of colour on a paper base, and then to transfer it to the glass itself.

Also well-known are the types of glass made in layers which have colours or decoration inside the layers; one procedure in particular is the production of decorated layered glass that involves the preparation of at least a first and a second plate of glass created especially to be joined to form a single layered panel; interposed between these plates are substances for hot gluing composed of two sheets of polyvinyl resin (polyvinylbutierral PVB) between which is interposed a transparent PVC film decorated using the photo-impression technique or any other procedure such as printing, adhesive etc; heat compression is then used to obtain a panel of layered glass. This compression, from 3-10 atmospheres at a temperature between 80-150°C is carried out in a furnace with laminating cylinders or using heat compression created by an autoclave.

### Aims and advantages of this invention

The aim of this invention regards the production of a glass tessera for the composition of ornamental mosaics and is formed by using fusion to join two flat glass elements which have previously been coloured on the interfaces using thermic fusion.

Another aim of this invention is that of obtaining a product that has the same dimensional and geometric characteristics of a tessera for making mosaics, but which has completely different aesthetic and functional characteristics. In particular the mosaics obtained using these tesseras can be used for covering indoor or outdoor surfaces, swimming pools or other architectural elements or urban furnishings where the desired result gives particular effects of refraction, reflection or diffusion of natural or artificial light, with the possibility of diversification given by their colour.

A further aim of this invention is to obtain a procedure with which to produce coloured glass tesseras on an industrial scale that does not vary substantially from the techniques and therefore the relevant the machines that are actually in use for the production of mosaic tesseras, that is, tesseras that can be obtained with the equipment used for cutting marble in regard to the cutting and assembling operations, and the equipment used for ceramics or those already in use for float glass in regard to the colouring and baking operations.

Another aim of this invention is to propose a technique that conveniently guarantees better results in the critical baking and cutting operations that must be carried out on tesseras made from flat layered glass, the layers of which have been coloured and joined by fusion.

### Ways of creating this invention.

The aims and objectives described above are fulfilled by a technique for producing glass tesseras for making ornamental mosaics that have been joined and coloured on the interfaces using thermic fusion; in other words, coloured by placing, on one face of a first layer of glass, a thin layer of a well-mixed paste composed of colouring oxides and opportune vitriflable melting elements at the temperature between which glass becomes soft and its subsequent cooling.

More specifically, this process can be considered to be subdivided into the following phases:
1) Storing the basic material which is composed of plates of glass that have previously been cut according to set measurements of about 40 x 40.
2) The aforesaid glass plates are carefully washed with de-mineralised water and then dried in special machines.
3) According to the colour of glass one wishes to obtain, the composition made up of colouring oxides and crystalline melting elements, is prepared, mixed and then finely triturated.
   As is already known, the melting elements dissolve the colouring oxides when the glass is re-baked, thus forming a uniform layer of coloured vitreous material, intensely enough to obtain the required colour. The melting elements also characterise the tonality of the colour of the glass in equal measure with the colouring oxide, as well as defining whether the mixture will be opaque or transparent.
   The oxides and the melting elements are preferably amalgamated through a watery or oily vehicle to obtain a solution that is more or less dense enough to allow it to be spread over the surface of the glass plate. The oily vehicle also has the characteristic of vaporising during the re-baking and colour fixing phases of the process while leaving the composition of the oxide mixture unaltered. The application of the colouring mixture can be carried out in various ways:
   Using a silk screen process
   Using a glazing process
   By spray painting
   Using a varnishing machine
   It is important that this procedure is carried out in a dust-free environment in order to avoid finding dust particles in the layers of colour.
4) Superimposing on each varnished layer a similar layer of transparent glass in such a way as to obtain a "sandwich" structure that will protect the varnish from atmospheric agents or other aggressive agents that could intervene during transport or setting in place.
5) Placing the prepared and assembled plates in a furnace so that they can be joined by fusion; a tunnel-type gas furnace with the burners positioned laterally in respect to the conveyor belt should be used for this process, or an electric furnace. The lateral burners of the tunnel-type furnace can be insulated with ceramic fibre so as to change the furnace into the muffled type, so that the heat does not touch the glass plates directly, but heats them through convection. The following reactions can be noted: the oily vehicle, or any other suitable substance that has been used, evaporates at around 300°C.; the melting element reacts with the oxide, causing a uniform film of coloured glass to form, which fuses with the plain glass, thus obtaining a monolithic coloured sandwich structure.
6) Using a gang mill, the coloured sandwich plates are then cut into tesseras of the typical dimensions used for making mosaics;
7) The tesseras are assembled in the rubber moulds and then covered by a paper net;
8) The finished pieces of mosaic are then removed and stored. Glass tesseras obtained in this way will have both aesthetic and mechanical characteristics peculiar to this type of tessera, in fact on one side there are two superimposed layers of glass interfaced with a coloured layer that has penetrated the inner faces of the layers of glass, thus giving a greater depth to the element obtained and a superior quality to the incident light with more brilliant visual effects in respect to the usual tesseras in stone or ceramic; on the other side, the superficial fusion of the glass plates insures a more efficacious and effective adherence in respect to the simple gluing process, thus ensuring that the glass plates do not come unglued or split into plates.

What is notable is the fact that using the process set up and described for cutting these glass sandwich tesseras, the same machines used for cutting marble and stone into tesseras for mosaics can be used, in fact it has been noted that cutting the tesseras in this way creates an abrasion on the corners of the tesseras, invisible to the naked eye, that eliminates all risk of wounding for those who handle these tesseras.

As can be seen, the technique described in this invention, advantageously fulfils the proposed objectives, allowing the realisation of glass tesseras that are not only durable but also have surprising chromatic characteristics, uniting brilliance and/or refractivity of the surface of the plain layer of glass in respect to the colour base, creating an effect of depth that cannot be obtained when using preceding techniques.

## Claims

1. Glass tesseras specially created for composing ornamental mosaics, **characterised by** the formal thickness of two flat elements made of industrial glass, which are superimposed and joined through thermic fusion and coloured during the process of fusion (or joining) of the same.

2. Glass tesseras as described in claim 1) **characterised by** the fact that the layer of colour has penetrated deeply into the joined, inner surfaces of the two glass plates, essentially forming a layer of variation to the vitreous composition, eliminating all risk of the two plates separating or coming unglued, something that could occur in a simple glued sandwich structure.

3. Glass tesseras as described in claims 1) and 2) **characterised by** the fact that the light that incides on the differently composed layers of glass, essentially a first layer of plain, transparent glass, a second coloured layer that can be semitransparent and a third, plain, transparent layer, causes physical superficial effects of brilliance and/or refractivity, giving a visual effect of depth that cannot be found in products using the preceding technique.

4. A procedure for producing tesseras made of glass that is joined and coloured on the interface of the fusion surface **characterised by**:
a) Storing the basic material composed of plates of glass previously cut according to set measurements of a dimension of about 40 x 40.
b) The aforesaid plates of glass are then carefully washed with de-mineralised water and then subsequently dried in special machines.
c) According to the coloured glass one wishes to obtain, a composition composed of colouring oxides and crystalline melting elements is prepared, then finely triturated and mixed or amalgamated with an oily vehicle or other substance and then applied to the interfaces of the glass plates through a silk screen or a glazing process, by spray painting or using a varnishing machine;
d) Superimposition on each varnished plate of a similar plate of transparent glass so as to form a "sandwich" structure that will protect the varnish against atmospheric agents or other aggressive agents that could come into contact with the glass during transport and/or setting in place.
e) Placing of the prepared and assembled glass plates into a furnace, preferably of the muffled type, so that the plates will be joined by fusion.
f) Cutting the coloured glass plates that have been joined by fusion into tesseras of the typical dimensions of ordinary mosaic tesseras, using the same gang mills that are also used for cutting marble and stone, in fact this way of cutting the tesseras creates an abrasion on their corners, invisible to the naked eye, that eliminates all risk of wounding for those who handle these tesseras.
